(19) Europäisches Patentamt

European Patent Office

Office européen des brevets

(11) EP 0 903 472 B1

(12) EUROPEAN PATENT SPECIFICATION

(45) Date of publication and mention
of the grant of the patent:
**17.09.2003 Bulletin 2003/38**

(51) Int Cl.⁷: **F01L 9/04**

(21) Application number: **98113408.3**

(22) Date of filing: **17.07.1998**

(54) **Electromagnetically driven valve for an internal combustion engine**

Elektromagnetisch angesteuertes Ventil für eine Brennkraftmaschine

Soupape à commande électromagnétique pour moteur à combustion interne

(84) Designated Contracting States:
**DE FR GB**

(30) Priority: **22.09.1997 JP 25705097**
**07.11.1997 JP 30591297**

(43) Date of publication of application:
**24.03.1999 Bulletin 1999/12**

(60) Divisional application:
**02018382.8 / 1 258 602**

(73) Proprietor: **TOYOTA JIDOSHA KABUSHIKI KAISHA**
**Aichi-ken 471-8571 (JP)**

(72) Inventors:
• **Hattori, Hiroyuki**
**Toyota-shi, Aichi-ken, 471-8571 (JP)**
• **Izuo, Takashi**
**Toyota-shi, Aichi-ken, 471-8571 (JP)**
• **Iida, Tatsuo**
**Toyota-shi, Aichi-ken, 471-8571 (JP)**
• **Asano, Masahiko**
**Toyota-shi, Aichi-ken, 471-8571 (JP)**
• **Kadowaki, Yoshinori**
**Toyota-shi, Aichi-ken, 471-8571 (JP)**
• **Yanai, Akihiro**
**Toyota-shi, Aichi-ken, 471-8571 (JP)**
• **Fuwa, Toshio**
**Toyota-shi, Aichi-ken, 471-8571 (JP)**

(74) Representative:
**Winter, Brandl, Fürniss, Hübner, Röss, Kaiser,**
**Polte Partnerschaft**
**Patent- und Rechtsanwaltskanzlei**
**Alois-Steinecker-Strasse 22**
**85354 Freising (DE)**

(56) References cited:
**EP-A- 0 722 039      EP-A- 0 793 004**
**DE-U- 29 620 741      GB-A- 2 137 420**
**US-A- 4 719 882**

## Description

Field of the Invention

The present invention relates to an electromagnetically driven valve for an internal combustion engine and, more particularly, relates to an electromagnetically driven valve suited for use as an intake valve or an exhaust valve of an internal combustion engine.

Background of the Invention

An electromagnetically driven valve employed as an intake valve or an exhaust valve of an internal combustion engine is disclosed, for instance, in Japanese Patent Official Publication No. HEI 4-502048 and Japanese Patent Application Laid-Open No. HEI 7-335437. This electromagnetically driven valve is provided with an armature attached to a valve body. An upper spring and a lower spring are disposed above and below the armature respectively. These springs urge the armature toward its neutral position.

An upper core and a lower core are disposed above and below the armature respectively and an upper coil and a lower coil are disposed within the upper core and the lower core respectively. The upper coil and the lower coil, if supplied with an exciting current, generate a magnetic flux circulating therethrough. Upon generation of such a magnetic flux, the armature is attracted toward the upper core or the lower core by an electromagnetic force (hereinafter referred to as an attracting force). Thus, the aforementioned electromagnetically driven valve can displace the valve body to its closed position or its open position by supplying a predetermined exciting current to the upper coil or the lower coil.

If supply of an exciting current to the upper coil or the lower coil is stopped after displacement of the valve body to its closed position or its open position, the armature and the valve body are urged by the springs to start a simple harmonic motion. Unless the amplitude of the simple harmonic motion is damped, the armature and the valve body that move from one displacement end toward the other displacement end (hereinafter referred to as a desired displacement end) reach the desired displacement end solely due to urging forces of the springs. However, such displacement of the armature and the valve body causes energy loss resulting from sliding friction or the like. Therefore, the critical position that can be reached by the armature and the valve body due to the urging forces of the springs is not coincident with the desired displacement end.

The aforementioned electromagnetically driven valve can compensate for the amount of energy loss resulting from sliding movement and displace the armature and the valve body to the desired displacement end by starting to supply an exciting current to one of the upper coil and the lower coil at a suitable timing after stoppage of supply of an exciting current to the other of the upper coil and the lower coil. The valve body can thereafter be opened and closed by alternately supplying an exciting current to the upper coil and the lower coil at suitable timings.

In the aforementioned electromagnetically driven valve, each of the upper core and the lower core is provided with an annular protrusion disposed along an outer periphery thereof. The annular protrusion, which has a predetermined length, protrudes from an end face of the upper core or the lower core. The inner diameter of the annular protrusion is slightly larger than the outer diameter of the armature.

When the armature is spaced apart from the desired displacement end, the attracting force acting on the armature (hereinafter referred to as a spaced-state attracting force) is larger in the case where the annular protrusion is provided than in the case where the annular protrusion is not provided. On the other hand, when the armature is close to the desired displacement end, the attracting force acting on the armature (hereinafter referred to as a close-state attracting force) is smaller in the case where the annular protrusion is provided than in the case where the annular protrusion is not provided. Accordingly, as the armature approaches the desired displacement end, the aforementioned electromagnetically driven valve can gradually increase an attracting force acting on the armature.

The armature collides with the upper core or the lower core upon arrival of the valve body at its open position or its closed position, thus causing impact noise. In order to reduce impact noise, it is desired to prevent the attracting force acting on the armature from becoming unsuitably large upon arrival of the armature at the desired displacement end.

In order to reliably displace the armature to the desired displacement end, it is necessary to ensure a spaced-state attracting force of a certain magnitude. In order to ensure a large spaced-state attracting force and reduce impact noise in the electromagnetically driven valve, it is advantageous to avoid an abrupt increase in the attracting force acting on the armature as the armature approaches the desired displacement end. The aforementioned electromagnetically driven valve can satisfy the aforementioned advantageous condition during both the valve opening operation and the valve closing operation. As a result, the aforementioned electromagnetically driven valve can achieve an enhanced tranquility.

In the aforementioned electromagnetically driven valve, the neutral position of the armature is set to the central position between an electromagnet on the valve opening side and an electromagnet on the valve closing side. Thus, there is no change in the amount of energy stored in a pair of springs regardless of whether the armature is positioned on the electromagnet on the valve closing side or on the electromagnet on the valve opening side. In this case, there is no substantial change in the amount of energy required for the springs to urge the armature regardless of whether the valve moves in the valve opening direction or in the valve closing direction.

However, the load applied to the valve body in the internal combustion engine may differ depending on whether the valve body moves in the valve opening direction or in the valve closing direction. Hence, a difference in the amount of energy loss may arise depending on whether the valve body of the electromagnetically driven valve moves in the valve opening direction or in the valve closing direction.

For example, the exhaust valve is opened when a high combustion pressure remains in a combustion chamber and it is closed when the combustion pressure is released. In this case, the load applied to the exhaust valve is larger during the valve opening operation than during the valve closing operation.

Preferably, there should be no substantial difference between the exciting current to be supplied to the electromagnet on the valve opening side and the exciting current to be supplied to the electromagnet on the valve closing side.

The aforementioned electromagnetically driven valve is unable to achieve appropriate operating characteristics during the valve opening operation and during the valve closing operation while substantially supplying an equal exciting current to the electromagnets on the valve opening side and on the valve closing side.

From the EP 0 793 004 A1 an electromagnetic valve according to the preambles of claims 1 and 2, respectively, is known. According to one embodiment, the armature is provided with a protrusion which protrudes in the direction of one of the cores. However, the valve for which this arrangement is chosen, is a gas exchange valve and no distinction is made as to the specific function of this valve.

Summary of the Invention

The present invention has been made in view of the aforementioned background and it is an object of the present invention to provide an electromagnetically driven valve that achieves appropriate operating characteristics in accordance with operating conditions of an internal combustion engine at the time of opening or closing a valve body, while providing an electromagnetically driven valve that achieves substantially the same operating characteristics regardless of whether the valve body moves in the valve opening direction or in the valve closing direction when a pair of electromagnets are substantially supplied with an equal exciting current,

This object is solved by the features of claims 1 and 2, respectively.

The present invention provides an electromagnetically driven valve for an internal combustion engine including an armature coupled to a valve body for reciprocal movement therewith between a first position and a second position, a first elastic member, a second elastic member, a first core, and a second core. The first elastic member is coupled to the armature to bias the armature toward the second position and the second elastic member is coupled to the armature to bias the armature toward the first position. A neutral position of the armature is defined between the first and second positions at the point where the forces applied from the first and second elastic member balance one another. The first core includes a first coil therein and the second core includes a second coil therein. The first and second cores are disposed on opposite sides of the armature and are positioned so that, when the armature is in the neutral position, the first and second cores are spaced apart from the armature.

When - according to claim 1 - the valve body is an exhaust valve for an internal combustion engine the first coil generates an electromagnetic force to attract the armature toward the first position in which the exhaust valve is open. The first core is provided with a first protrusion protruding a predetermined length toward the armature, thereby making a distance between the first core and the armature smaller than a distance between the second core and the armature when the armature is located in the neutral position. The first protrusion is annular and has a diameter slightly larger than an outer diameter of the armature.

When - according to claim 2 - the valve body is an intake valve for an internal combustion engine and is separated from the armature, the second coil generates an electromagnetic force attracting the armature toward the second position to close the intake valve. The second core is provided with a first protrusion protruding a predetermined length toward the armature, thereby making a distance between the second core and the armature smaller than a distance between the first core and the armature when the armature is located in the neutral position. The first protrusion is annular and has a diameter slighly larger than an outer diameter of the armature.

According to the present invention, whether the valve body is driven in the valve opening direction or in the valve closing direction, the armature can suitably displace the valve body regardless of a difference in load applied thereto or a difference in amplitude of a damping factor thereof.

Moreover, according to claim 1, when the armature is close to the first core, a side of the protrusion disposed on the first core faces a protrusion facing side disposed on the armature. In this construction, as the armature approaches the first core, a large spaced-state attracting force acting on the armature tends to increase gradually. As the armature approaches the second core, a relatively small spaced-state attracting force acting on the armature tends to increase abruptly. According to the characteristics of this aspect, in the case where a large load is applied to the valve body when the armature approaches the first core and no large load is applied to the valve body when the armature approaches the second core, the valve body can be suitably operated with a low electric power consumption.

Moreover, according to claim 2, when the armature is close to the second core, a side of the protrusion disposed on the second core faces a protrusion facing side disposed on the armature. In this construction, as the armature approaches the second core, a large spaced-state attracting force acting on the armature tends to increase gradually. As the armature approaches the first core, a relatively small spaced-state attracting force acting on the armature tends to increase abruptly.

Brief Description Of The Drawings

Further objects, features and advantages of the present invention will become apparent from the following description of preferred embodiments with reference to the accompanying drawings, wherein:

Fig. 1 is a sectional view of an electromagnetically driven valve according to a first embodiment of the present invention;
Fig. 2 illustrates flow of a magnetic flux $_U$ circulating round an upper coil in the electromagnetically driven valve as illustrated in Fig. 1 when an armature is spaced apart from the upper core;
Fig. 3 illustrates flow of a magnetic flux $_L$ circulating round a lower coil in the electromagnetically driven valve as illustrated in Fig. 1 when the armature is spaced apart from the lower core;
Fig. 4 illustrates flow of a magnetic flux $_U$ circulating round the upper coil in the electromagnetically driven valve as illustrated in Fig. 1 when the armature is close to the upper core;
Fig. 5 illustrates flow of a magnetic flux $_L$ circulating round the lower coil in the electromagnetically driven valve as illustrated in Fig. 1 when the armature is close to the lower core;
Fig. 6 illustrates flow of a magnetic flux $_U$ circulating round the upper coil in the electromagnetically driven valve as illustrated in Fig. 1 when the armature abuts the upper core;
Fig. 7 illustrates flow of a magnetic flux $_L$ circulating round the lower coil in the electromagnetically driven valve as illustrated in Fig. 1 when the armature abuts the lower core;
Fig. 8 illustrates operating characteristics of the electromagnetically driven valve as illustrated in Fig. 1;
Fig. 9 is a sectional view illustrating a part surrounding an armature of an electromagnetically driven valve according to a second embodiment of the present invention;
Fig. 10 is a sectional view illustrating a part surrounding an armature of an electromagnetically driven valve according to a third embodiment of the present invention;
Fig. 11 is an overall structural view of an electromagnetically driven valve according to a fourth embodiment of the present invention;

Description Of Preferred Embodiments

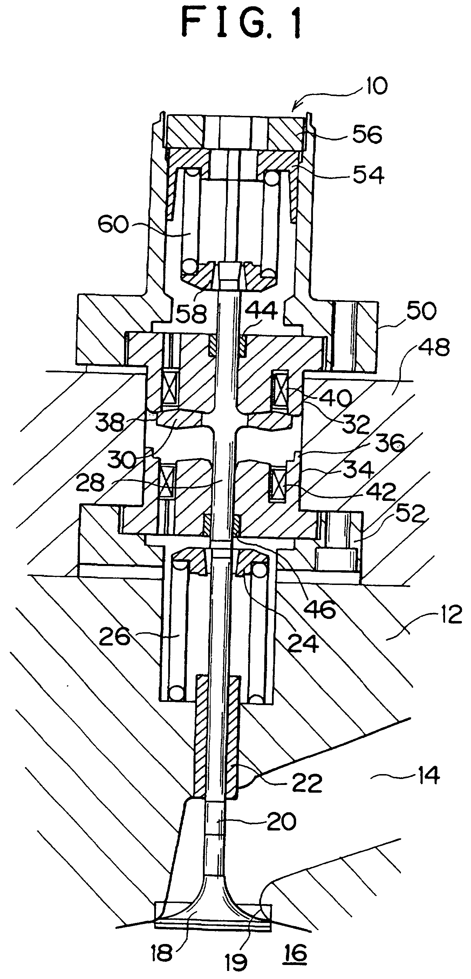

Fig. 1 is a sectional view of an electromagnetically driven valve 10 according to a first embodiment of the present invention. The electromagnetically driven valve 10 is employed as an exhaust valve for an internal combustion engine. The electromagnetically driven valve 10 is attached to a cylinder head 12 in which an exhaust port 14 is formed. Formed in a lower portion of the cylinder head 12 is a combustion chamber 16. The electromagnetically driven valve 10 is provided with a valve body 18 for bringing the exhaust port 14 into or out of communication with the combustion chamber 16. A valve seat 19 onto which the valve body moves is disposed in the exhaust port 14. The exhaust port 14 is brought into communication with the combustion chamber 16 when the valve body 18 moves away from the valve seat 19, while the exhaust port 14 is brought out of communication with the combustion chamber 16 when the valve body 18 moves onto the valve seat 19.

A valve shaft 20 is formed integrally with the valve body 18. A valve guide 22 is disposed inside the cylinder head 12. The valve shaft 20 is slidably held by the valve guide 22. A lower retainer 24 is attached to an upper end portion of the valve shaft 20. A lower spring 26 is disposed beneath the lower retainer 24. The lower spring 26 urges the lower retainer 24 upwards in Fig. 1.

The upper end portion of the valve shaft 20 abuts against an armature shaft 28 made of a non-magnetic material. An armature 30, which is an annular member made of a magnetic material, is attached to the armature shaft 28.

Upper core 32 and a lower core 34, each being annular members made of a magnetic material, are disposed above and below the armature 30 respectively. The lower core 34 has an annular protrusion 36, which has a predetermined length and protrudes from a surface of the lower core 34 toward the upper core 32. The electromagnetically driven valve 10 according to this embodiment is characterized in that the annular protrusion 36 is formed not on the upper core 32 but only on the lower core 34.

The annular protrusion 36 has a diameter slightly larger than an outer diameter of the armature 30. Thus, when the armature 30 approaches sufficiently close to the lower core 34, an inner wall of the annular protrusion 36 faces an outer peripheral surface of the armature 30. The outer peripheral surface of the armature 30, which faces the inner peripheral surface of the annular protrusion 36, will hereinafter be referred to as a protrusion facing side 38.

The upper core 32 and the lower core 34 accommodate an upper coil 40 and a lower coil 42 respectively. Bearings 44, 46 are disposed in the vicinity of central axes of the upper core 32 and the lower core 34 respectively. The armature shaft 28 is slidably held by the bearings 44, 46.

A core guide 48 surrounds outer peripheral surfaces of the upper core 32 and the lower core 34. The core guide 48 suitably adjusts a location of the upper core 32 relative to the lower core 34. An upper case 50 is attached to an upper portion of the upper core 32, while a lower case 52 is attached to a lower portion of the lower core 34.

A spring guide 54 and an adjuster bolt 56 are disposed in an upper end portion of the upper case 50. An upper retainer 58 connected with an upper end of the armature shaft 28 is disposed below the spring guide 54. Disposed between the spring guide 54 and the upper retainer 58 is an upper spring 60 which urges the upper retainer 58 and the armature shaft 28 downwards in Fig. 1. The adjuster bolt 56 adjusts a neutral position of the armature 30. In this embodiment, the neutral position of the armature 30 is adjusted to a central portion of a space defined by the upper core 32 and the lower core 34.

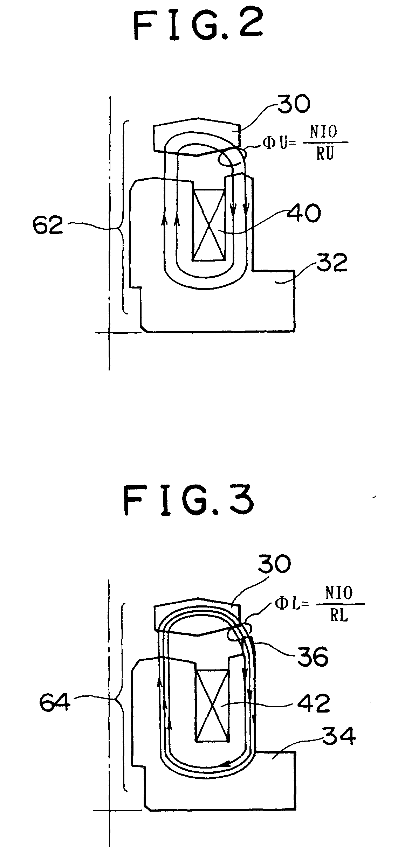

The operation of the electromagnetically driven valve 10 will hereinafter be described with reference to Figs. 2 through 9 as well as Fig. 1.

In the electromagnetically driven valve 10, when no exciting current is supplied to the upper coil 40 or the lower coil 42, the armature 30 assumes its neutral position. That is, the armature 30 is held in a central portion of the space defined by the upper core 32 and the lower core 34. When an exciting current is supplied to the upper coil 40 with the armature 30 assuming its neutral position, an electromagnetic force attracting the armature 30 toward the upper core 32 is generated in a space defined by the armature 30 and the upper core 32. Hence, the electromagnetically driven valve 10 can displace the armature 30 toward the upper core 32 by supplying a suitable exciting current to the upper coil 40. The valve body 18 moves onto the valve seat 19 to be completely closed prior to abutment of the armature 30 on the upper core 32. Thus, the electromagnetically driven valve 10 can completely close the valve body 18 by supplying a suitable exciting current to the upper coil 40.

If supply of an exciting current to the upper coil 40 is stopped with the valve body 18 completely closed, the valve body 18, the valve shaft 20, the armature shaft 28 and the armature 30 start to move downwards in Fig. 1 due to urging forces of the upper spring 60 and the lower spring 26.

Displacement of the valve body 18 causes energy loss resulting from sliding friction and the like. The electromagnetically driven valve 10 can compensate for such energy loss by supplying an exciting current to the lower coil 42 to displace the valve body 18 until the armature 30 abuts against the lower core 34. The valve body 18 becomes completely open when the armature 30 abuts against the lower core 34.

Consequently, the electromagnetically driven valve 10 can completely open the valve body 18 by starting to supply an exciting current to the lower coil 42 at a suitable time after stoppage of the supply of the exciting current to the upper coil 40. The electromagnetically driven valve 10 can suitably open or close the valve body 18 by supplying at a suitable time thereafter a suitable exciting current to the upper coil 40 or the lower coil 42.

The electromagnetically driven valve 10 according to this embodiment is characterized in that the annular protrusion 36 is formed not on the upper core 32 but only on the lower core 34. The effect achieved by this feature will be described hereinafter.

Fig. 2 illustrates flow of a magnetic flux $_U$ circulating through the upper core 32 and the armature 30 when a predetermined current $I_0$ is supplied to the upper coil 40. The flow of the magnetic flux $_U$ as illustrated in Fig. 2 is realized when the armature 30 is spaced far apart from the upper core 32. Provided that N represents the number of turns of the upper coil 40 and $R_U$ represents a reluctance of a magnetic circuit including the upper core 32 and the armature 30 (hereinafter referred to as an upper magnetic circuit 62), the magnetic flux $_U$ circulating through the upper magnetic circuit 62 is expressed as follows.

$$_U = (NI_0)/R_U \qquad (1)$$

Fig. 3 illustrates flow of a magnetic flux $_L$ circulating through the lower core 34 and the armature 30 when a predetermined current $I_0$ is supplied to the lower coil 42. The flow of the magnetic flux $_L$ as illustrated in Fig. 3 is realized when the armature 30 is spaced far apart from the lower core 34. Provided that N represents the number of turns of the lower coil 42 and $R_L$ represents a reluctance of a magnetic circuit including the lower core 34 and the armature 30 (hereinafter referred to as a lower magnetic circuit 64), the magnetic flux $_L$ circulating through the lower magnetic circuit 64 is expressed as follows.

$$_L = (N I_0)/R_L \qquad (2)$$

The smaller an air gap formed between the upper core 32 and the armature 30 becomes, the smaller the reluctance $R_U$ of the upper magnetic circuit 62 becomes. Likewise, the smaller an air gap formed between the lower core 34 and the armature 30 becomes, the smaller the reluctance $R_L$ of the lower magnetic circuit 64 becomes.

In this embodiment, the annular protrusion 36 protruding toward the armature 30 is formed on the lower core 34. When the armature 30 is spaced apart from the lower core 34, the annular protrusion 36 serves to reduce the air gap formed therebetween. Hence, if the armature 30 is equally distant from the upper core 32 and the lower core 34, the reluctance $R_L$ of the lower magnetic circuit 64 is smaller than the reluctance $R_U$ of the upper magnetic circuit 62. Accordingly, in this case, the amount of magnetic flux $_L$ flowing through the lower magnetic circuit 64 is larger than the amount of magnetic flux $_U$ flowing through the upper magnetic circuit 62.

In the electromagnetically driven valve 10, when the magnetic flux $_U$ flows through the upper magnetic circuit 62, an attracting force is generated between the armature 30 and the upper core 32 to reduce the air gap formed in the upper magnetic circuit 62. On the other hand, when the magnetic flux $_L$ flows through the lower magnetic circuit 64, an attracting force is generated between the armature 30 and the lower core 34 to reduce the air gap formed in the lower magnetic circuit 64.

If the armature 30 is spaced far apart from the upper core 32, the aforementioned attracting force mainly serves to attract the armature 30 toward the upper core 32. If the armature 30 is spaced far apart from the lower core 34, the aforementioned attracting force mainly serves to attract the armature 30 toward the lower core 34. The larger the amount of magnetic flux flowing through the air gap to be reduced becomes, the larger the aforementioned attracting force becomes.

Thus, when the armature 30 is equally distant from the upper core 32 and the lower core 34 and an exciting current $I_0$ is supplied to both the upper coil 40 and the lower coil 42, the attracting force generated between the armature 30 and the lower core 34 is larger than the attracting force generated between the armature 30 and the upper core 32. When the armature 30 is spaced far apart from the upper core 32 or the lower core 34, an attracting force generated therebetween will hereinafter be referred to as a spaced-state attracting force $F_F$.

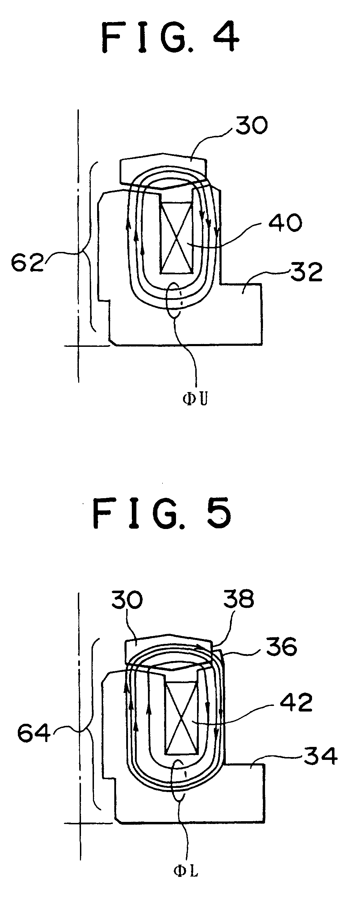

Fig. 4 illustrates flow of a magnetic flux $_U$ circulating through the upper core 32 and the armature 30 when a predetermined current $I_0$ is supplied to the upper coil 40. The flow of the magnetic flux $_U$ as illustrated in Fig. 4 is realized when the armature 30 is spaced slightly apart from the upper core 32.

The smaller the air gap formed between the armature 30 and the upper core 32 becomes, the smaller the reluctance $R_U$ of the upper magnetic circuit 62 becomes. As can be seen from the aforementioned formula (1), the smaller the reluctance $R_U$ becomes, the larger the amount of magnetic flux $_U$ flowing through the upper magnetic circuit 62 becomes. Hence, the amount of magnetic flux $_U$ flowing through the upper magnetic circuit 62 is larger when the armature 30 is close to the upper core 32 as illustrated in Fig. 4 than when the armature 30 is spaced far apart from the upper core 32 as illustrated in Fig. 2.

The magnetic flux $_U$, which is transferred between the armature 30 and the upper core 32, mainly serves as an attracting force that attracts the armature 30 toward the upper core 32 even when the armature 30 is spaced slightly apart from the upper core 32. Hence, as the armature 30 approaches the upper core 32, the attracting force that attracts the armature 30 toward the upper core 32 increases in proportion with the magnetic flux $_U$ flowing through the upper magnetic circuit 62. When the armature 30 is close to the upper core 32, an attracting force that attracts the armature 30 toward the upper core 32 will hereinafter be referred to as a close-state attracting force $F_N$.

Fig. 5 illustrates flow of a magnetic flux $_L$ circulating through the lower core 34 and the armature 30 when a predetermined current $I_0$ is supplied to the lower coil 42. The flow of the magnetic flux $_L$ as illustrated in Fig. 5 is realized when the armature 30 is spaced slightly apart from the lower core 34.

The smaller the air gap formed between the armature 30 and the lower core 34 becomes, the smaller the reluctance $R_L$ of the lower magnetic circuit 64 becomes. As can be seen from the aforementioned formula (2), the smaller the reluctance $R_L$ becomes, the larger the amount of magnetic flux $_L$ flowing through the lower magnetic circuit 64 becomes. Hence, the amount of magnetic flux $_L$ flowing through the lower magnetic circuit 64 is larger when the armature 30 is close to the lower core 34 as illustrated in Fig. 5 than when the armature 30 is spaced far apart from the lower core 34 as illustrated in Fig. 3.

A magnetic flux is transferred between the armature 30 and the lower core 34 via an air gap formed between the protrusion facing side 38 of the armature 30 and the annular protrusion 36 of the lower core 34 (hereinafter referred to as a radial air gap) as well as an air gap formed between a bottom face of the armature 30 and an upper face of the lower core 34 (hereinafter referred to as an axial air gap).

The magnetic flux transferred via the axial air gap serves as an attracting force that always attracts the armature 30 toward the lower core 34. On the other hand, as illustrated in Fig. 5, when the armature 30 is close to the lower core 34 to such an extent that the protrusion facing side 38 faces the inner wall of the annular protrusion 36, the magnetic flux transferred via the radial air gap acts on the armature 30 in the radial direction such that the armature 30 is not urged toward the lower core 34. Therefore, when the armature 30 is close to the lower core 34, the larger the magnetic flux flowing through the axial air gap becomes, the larger the attracting force (the close-state attracting force $F_N$) that attracts the armature 30 toward the lower core 34 becomes.

As the armature 30 approaches the lower core 34, the axial air gap decreases in proportion with a displacement amount of the armature 30 and reaches its minimum value of "0" upon abutment of the armature 30 on the lower core 34. On the other hand, as the armature 30 approaches the lower core 34, the radial air gap reaches its minimum value $G_{MIN}$ upon arrival of a lower end portion of the protrusion facing side 38 on an upper end portion of the annular protrusion 36. Accordingly, the radial air gap is smaller than the axial air gap until the axial air gap becomes smaller than $G_{MIN}$ after arrival of the lower end portion of the protrusion facing side 38 on the upper end portion of the annular protrusion 36.

The magnetic flux $_L$ flowing through the lower magnetic circuit 64 tends to follow a route having a small reluctance. Thus, when the radial air gap is smaller than the axial air gap, as the armature 30 approaches the lower core 34, the magnetic flux $_L$ flowing through the lower magnetic circuit 64 passes in large part through the radial air gap. In this case, the close-state attracting force $F_N$ assumes a relatively small value for the magnetic flux $_L$. Further, as the armature 30 approaches the lower core 34, the close-state attracting force $F_N$ undergoes relatively gradual changes.

Consequently, the electromagnetically driven valve 10 ensures that the close-state attracting force $F_N$ generated between the armature 30 and the lower core 34 (hereinafter referred to as a lower close-state attracting force) is smaller than the close-state attracting force $F_N$ generated between the armature 30 and the upper core 32 (hereinafter referred to as an upper close-state attracting force). In addition, the lower close-state attracting force generated as the armature 30 approaches the lower core 34 changes more gradually than the upper close-state attracting force generated as the armature 30 approaches the upper core 32.

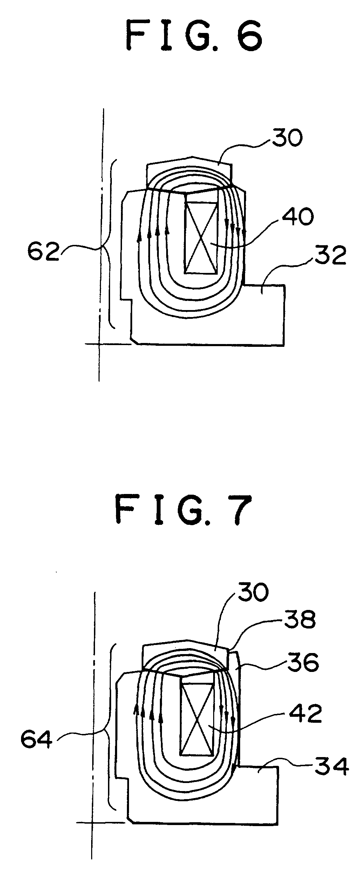

Fig. 6 illustrates flow of a magnetic flux $_U$ circulating through the upper core 32 and the armature 30 when a predetermined current $I_0$ is supplied to the upper coil 40. The flow of the magnetic flux $_U$ as illustrated in Fig. 6 is realized when the armature 30 abuts against the upper core 32.

The reluctance $R_U$ of the upper magnetic circuit 62 assumes its minimum value when the armature 30 abuts against the upper core 32. In this case, given an exciting current $I_0$, the maximum magnetic flux $_{UMAX}$ flows through the upper magnetic circuit 62 and the maximum attracting force is generated between the armature 30 and the upper core 32. This attracting force will hereinafter be referred to as an abutment-state attracting force $F_C$.

Fig. 7 illustrates flow of a magnetic flux $_L$ circulating through the lower core 34 and the armature 30 when a predetermined current $I_0$ is supplied to the lower coil 42. The flow of the magnetic flux $_L$ as illustrated in Fig. 7 is realized when the armature 30 abuts against the lower core 34.

The reluctance $R_L$ of the lower magnetic circuit 64 assumes its minimum value when the armature 30 abuts against the lower core 34. In this case, given an exciting current $I_0$, the maximum magnetic flux $_{LMAX}$ flows through the lower magnetic circuit 64. In this embodiment, the air gap formed between the protrusion facing side 38 of the armature 30 and the annular protrusion 36 of the lower core 34 always exceeds the minimum value $G_{MIN}$. Thus, when the armature 30 abuts against the lower core 34, almost all of the magnetic flux $_L$ is transferred between the bottom face of the armature 30 and the upper face of the lower core 34. In this case, given an exciting current $I_0$, an abutment-state attracting force $F_C$ is generated between the armature 30 and the lower core 34. This abutment-state attracting force $F_C$ is substantially equal to the abutment-state attracting force $F_C$ generated between the armature 30 and the upper core 32.

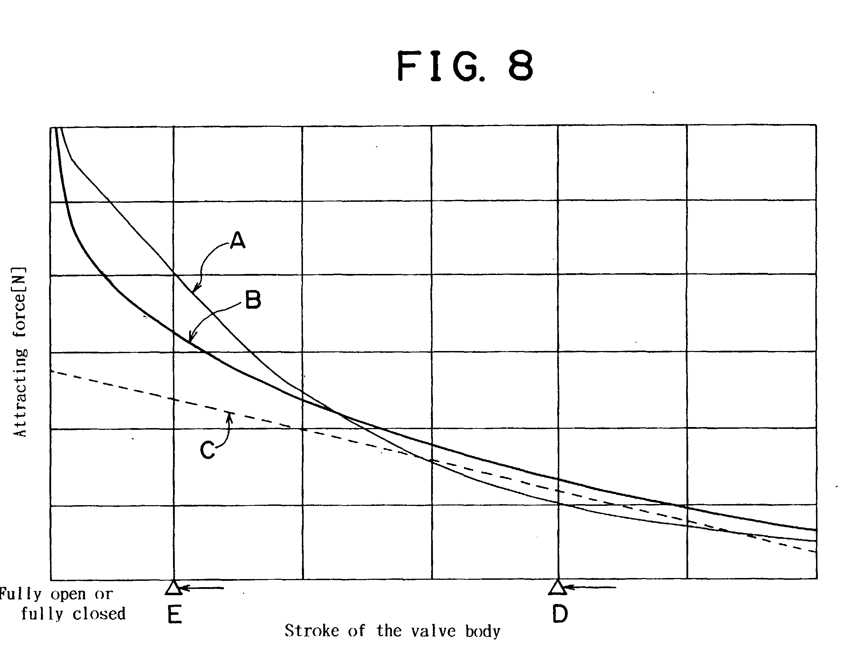

Fig. 8 illustrates characteristics of the electromagnetically driven valve 10 in accordance with changes in stroke of the valve body 18. Referring to Fig. 8, a curve A indicates an attracting force generated between the armature 30 and the upper core 32 when the valve body 18 is displaced between its neutral position and its fully closed position with an exciting current $I_0$ supplied to the upper coil 40. Further, a curve B indicates an attracting force generated between the armature 30 and the lower core 34 when the valve body 18 is displaced between its neutral position and its fully open position with the exciting current $I_0$ supplied to the lower coil 42. Still further, a curve C indicates a spring force generated by the upper spring 60 and the lower spring 26 when the valve body 18 is displaced between its neutral position and its fully open position or between its neutral position and its fully closed position.

As described above, an exciting current $I_0$ is supplied to both the upper coil 40 and the lower coil 42, the spaced-state attracting force $F_F$ is larger between the armature 30 and the lower core 34 than between the armature 30 and the upper core 32. In this case, the close-state attracting force $F_N$ is smaller between the armature 30 and the lower core 34 than between the armature 30 and the upper core 32. Further, the abutment-state attracting force $F_C$ generated between the armature 30 and the upper core 32 is substantially equal to the abutment-state attracting force $F_C$ generated between the armature 30 and the lower core 34.

Hence, as the curve A indicates, the attracting force generated between the armature 30 and the upper core 32 is relatively small when the valve body 18 is located in the vicinity of its neutral position. This attracting force tends to increase relatively steeply as the valve body 18 approaches its fully closed position. On the other hand, as the curve B indicates, the attracting force generated between the armature 30 and the lower core 34 is relatively large when the valve body 18 is located in the vicinity of its neutral position. This attracting force tends to increase relatively gradually as the valve body 18 approaches its fully open position.

As described already, the electromagnetically driven valve 10 is used as an exhaust valve for an internal combustion engine. Hence, the electromagnetically driven valve 10 operates to open the valve body 18 when a high combustion pressure remains in the combustion chamber 16 and close the valve body 18 after release of the combustion pressure. If the valve body 18 is displaced toward its fully open position when a high combustion pressure remains in the combustion chamber 16, a large load is applied to the valve body 18. On the other hand, when the valve body 18 is thereafter displaced toward its fully closed position, such a large load is not applied to the valve body.

The electromagnetically driven valve 10 is constructed such that the valve body 18, when in its fully closed position after stoppage of supply of an exciting current to the upper coil 40, is displaced toward its fully open position by urging forces of the upper spring 60 and the lower spring 26. Likewise, the electromagnetically driven valve 10 is constructed such that the valve body 18, when in its fully open position after stoppage of supply of an exciting current to the lower coil, is displaced toward its fully closed position by urging forces of the upper spring 60 and the lower spring 26.

In Fig. 8, a critical position that can be reached by the valve body 18 due to urging forces of the upper spring 60 and the lower spring 26 during the valve opening operation of the valve body 18 is marked as D. A critical position that can be reached by the valve body 18 due to urging forces of the upper spring 60 and the lower spring 26 during the valve closing operation of the valve body 18 is marked as E. As described above, the valve body 18 is subjected to a larger load during the valve opening operation than during the valve closing operation. Thus, the critical position D is closer to the neutral position of the valve body 18 than is the critical position E.

In order to suitably displace the valve body 18 to its fully open position, when the valve body 18 is located at the critical position D, it is necessary to generate an attracting force that exceeds spring forces generated by the upper spring 60 and the lower spring 26 (the spring forces that urge the valve body 18 toward its neutral position). As the curve B and the straight line C in Fig. 8 indicate, the electromagnetically driven valve 10 satisfies the aforementioned requirement. Hence, the electromagnetically driven valve 10 can suitably displace the valve body 18 to its fully open position.

When the valve body 18 is displaced toward the upper core 32 by a distance corresponding to the critical position D, the attracting force generated between the armature 30 and the upper core 32 is smaller than the spring forces generated by the upper spring 60 and the lower spring 26. Hence, if the lower core 34 is constructed in the same manner as the upper core 32, that is, unless the lower core 34 is provided with the annular protrusion 36, the valve body 18 cannot be displaced suitably to its fully closed position by supplying an exciting current $I_0$ to the lower coil 42. In view of this respect, the electromagnetically driven valve 10 is constructed such that the valve body 18 can be displaced to its fully closed position with a low electric power consumption.

In order to suitably displace the valve body 18 to its fully closed position, when the valve body 18 is located at the critical position E, it is necessary to generate an attracting force that exceeds spring forces generated by the upper spring 60 and the lower spring 26 (the spring forces that urge the valve body 18 toward its neutral position). As the curve A and the straight line C in Fig. 8 indicate, the electromagnetically driven valve 10 satisfies the aforementioned requirement. Hence, the electromagnetically driven valve 10 can suitably displace the valve body 18 to its fully closed position.

No matter how small the attracting force generated between the armature 30 and the upper core 32 may be before the valve body 18 of the electromagnetically driven valve 10 reaches the critical position E, if the aforementioned requirement is satisfied when the valve body 18 reaches the critical position E, the valve body 18 will be suitably displaced to its fully closed position. As illustrated in Fig. 8, if an exciting current $I_0$ is supplied to the upper coil 40, an attracting force generated between the armature 30 and the upper core 32 when the valve body 18 reaches the critical position E is sufficiently larger than the spring forces generated by the upper spring 60 and the lower spring 26. Thus, even if the exciting current supplied to the upper coil 40 is smaller than a predetermined value $I_0$, the electromagnetically driven valve 10 can suitably displace the valve body 18 to its fully closed position.

As the curve A and the curve B in Fig. 8 indicate, the upper core 32 is more suitable in structure than the lower core 34 to generate a close-state attracting force $F_N$ sufficiently large from the exciting current $I_0$. Thus, the upper core 32 is more suitable in structure than the lower core 34 to generate an attracting force exceeding the spring forces generated by the upper spring 60 and the lower spring 26 with a low electric power consumption when the valve body 18 is located at the critical position E. In this embodiment, the exciting current supplied to the upper coil 40 is set to such a value that the attracting force generated between the armature 30 and the upper core 32 when the valve body 18 is located at the critical position E slightly exceeds the spring forces generated by the upper spring 60 and the lower spring 26. As a result, the electromagnetically driven valve 10 makes it possible to drastically economize on electric power in displacing the valve body 18 to its fully closed position.

While the internal combustion engine is in operation, the valve body 18 needs to be held either at its fully closed position or at its fully open position. The electromagnetically driven valve 10 can hold the valve body 18 at either its fully closed position or its fully open position by supplying a suitable exciting current to the lower coil 42 or the upper coil 40 after arrival of the valve body 18 at its fully open or closed position - that is, after arrival of the armature 30 on the lower core 34 or the upper core 32.

As described previously, given an exciting cur-

rent $I_0$, the abutment-state attracting force $F_C$ generated between the armature 30 and the upper core 32 is substantially equal to the abutment-state attracting force $F_C$ generated between the armature 30 and the lower core 34. Thus, the electromagnetically driven valve 10 makes it possible to drastically economize on electric power not only in displacing the valve body 18 to its fully closed position but also in displacing the valve body 18 to its fully open position.

As described previously, the characteristics of the electromagnetically driven valve 10 according to this embodiment are determined in view of the relationship between timings for opening and closing the valve body 18 and operating conditions of the internal combustion engine. Thus, while the internal combustion engine is in operation, the electromagnetically driven valve 10 can suitably open and close the valve body 18, while making it possible to drastically economize on electric power.

Although the upper core 32 is not provided with a protrusion in this embodiment, the present invention is not limited to such a construction. For example, the upper core 32 may be provided with a protrusion that is smaller than the annular protrusion 36.

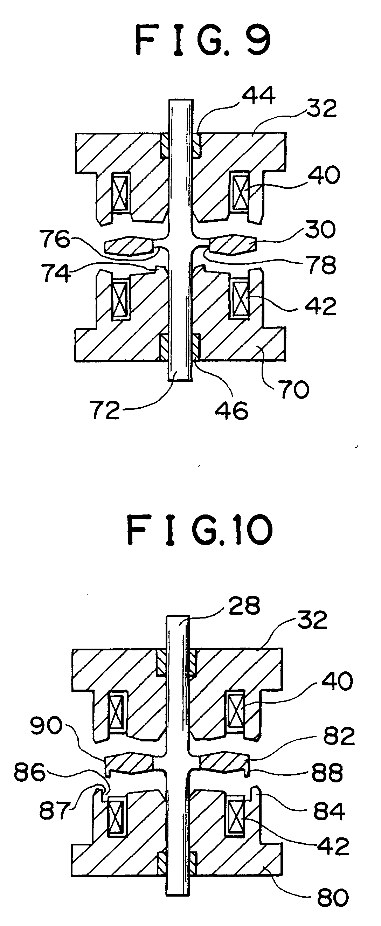

An electromagnetically driven valve according to a second embodiment of the present invention will now be described with reference to Fig. 9.

Fig. 9 is a sectional view illustrating a part surrounding the armature of the electromagnetically driven valve according to the second embodiment. In Figs. 9 and 1, like elements are denoted by like reference numerals. Referring to Fig. 9, the description of those elements constructed in the same manner as in Fig. 1 will be omitted.

The electromagnetically driven valve according to this embodiment is realized by substituting a lower core 70 and an armature shaft 72 as illustrated in Fig. 9 for the lower core 34 and the armature shaft 28 as illustrated in Fig. 1. The lower core 70 has an annular protrusion 74 surrounding the armature shaft 72. On the other hand, the armature shaft 72 has a recess 76 accommodating the annular protrusion 74. The armature shaft 72 is connected with the armature 30 at the recess 76.

By providing the armature shaft 72 with the recess 76, a protrusion facing side 78 is formed on an inner peripheral surface of the armature 30. When the armature 30 is close to the lower core 70, the protrusion facing side 78 of the armature 30 faces an outer peripheral surface of the annular protrusion 74. Since the inner diameter of the armature 30 is slightly larger than the outer diameter of the annular protrusion 74, a predetermined clearance is always formed between the protrusion facing side 78 and the annular protrusion 74.

In the electromagnetically driven valve according to this embodiment, the annular protrusion 74 and the protrusion facing side 78 operate substantially in the same manner as the annular protrusion 36 and the protrusion facing side 38. Thus, as is the case with the electromagnetically driven valve 10 according to the first embodiment, while the internal combustion engine is in operation, the electromagnetically driven valve according to this embodiment can suitably open and close the valve body 18, while making it possible to drastically economize on electric power.

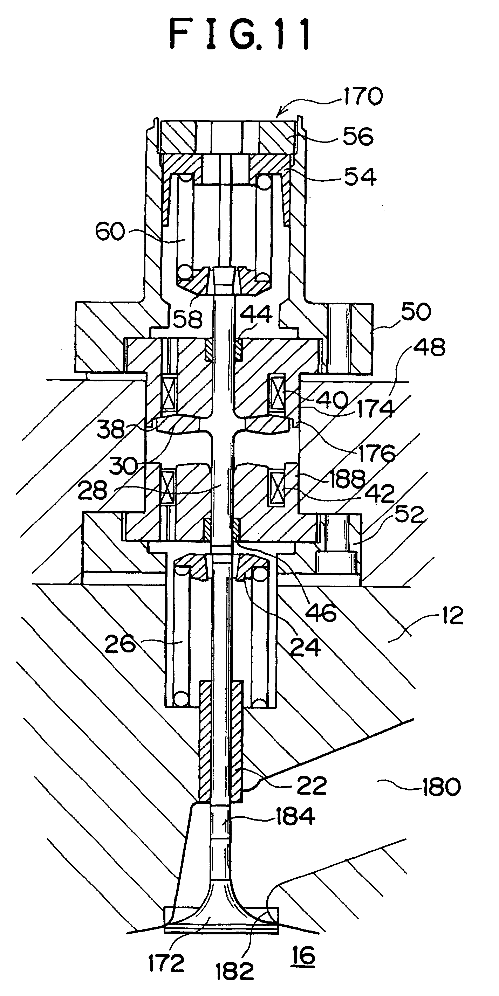

An electromagnetically driven valve according to a third embodiment of the present invention will now be described with reference to Fig. 10.

Fig. 10 is a sectional view illustrating a part surrounding the armature of the electromagnetically driven valve according to the third embodiment. In Figs. 10 and 1, like elements are denoted by like reference numerals. Referring to Fig. 10, the description of those elements constructed in the same manner as in Fig. 1 will be omitted.

The electromagnetically driven valve according to this embodiment is realized by substituting a lower core 80 and an armature 82 as illustrated in Fig. 10 for the lower core 34 and the armature 30 as illustrated in Fig. 1. The lower core 80 has a first annular protrusion 84 and an annular groove 86. The first annular protrusion 84 is disposed along the outermost periphery of the lower core 80 and the annular groove 86 is located radially inward of the first annular protrusion 84. A first protrusion facing side 87 is formed on an inner peripheral surface of the first annular protrusion 84. On the other hand, a second annular protrusion 88 is disposed along the outermost periphery of the armature 82. A second protrusion facing side 90 is formed on an outer peripheral surface of the second annular protrusion 88.

The second annular protrusion 88 is disposed so as to be fitted with the annular groove 86 of the lower core 80 when the armature 82 is close to the lower core 80. In this state, the second protrusion facing side 90 faces an inner wall of the first annular protrusion 84. That is, the outer peripheral surface of the second annular protrusion 88 faces the first protrusion facing side 87. Since the outer diameter of the armature 82 is slightly smaller than the outer diameter of the first annular protrusion 84, a predetermined clearance is always formed between the first annular protrusion 84 and the second protrusion facing side 90.

In the electromagnetically driven valve according to this embodiment, the first annular protrusion 84 and the second annular protrusion 88 operate substantially in the same manner as the annular protrusion 36 in the first embodiment. Further, the first protrusion facing side 87 and the second protrusion facing side 90 operate substantially in the same manner as the protrusion facing side 38 in the first embodiment. Thus, as is the case with the electromagnetically driven valve 10 according to the first embodiment, while the internal combustion engine is in operation, the electromagnetically driven valve according to this embodiment can suitably open and close the valve body 18, while making it possible to drastically economize on electric power.

Although the armature 82 is not provided with a protrusion protruding therefrom toward the upper core 32 in this embodiment, the present invention is not limited to such a construction. For example, a protrusion smaller than the second annular protrusion 88 may be formed on the side of the armature 82 that faces the upper core 32.

Although the lower core 80 and the armature 82 are provided with the first annular protrusion 84 and the second annular protrusion 88 respectively in this embodiment, the present invention is not limited to such a construction. It may also be possible to provide only the armature 82 with an annular protrusion.

An electromagnetically driven valve according to a fourth embodiment of the present invention will now be described with reference to Fig. 11.

Fig. 11 is an overall structural view of an electromagnetically driven valve 170 according to the fourth embodiment. The electromagnetically driven valve 170 is characterized in that it is provided with an intake valve 172 and an annular protrusion 176 is formed only on an upper core 174. In Figs. 11 and 1, like elements are denoted by like reference numerals. Referring to Fig. 11, the description of those elements constructed in the same manner as in Fig. 1 will be omitted or simplified. Formed in the cylinder head 12 is an intake port 180 in which a valve seat 182 is disposed. When the intake valve 172 moves onto the valve seat 182, the intake port 180 is brought out of communication with the combustion chamber 16. When the intake valve 172 moves away from the valve seat 182, the intake port 180 is brought into communication with the combustion chamber 16.

Unlike the case of the exhaust valve, the intake valve 172 is opened when no combustion pressure remains in the combustion chamber 16. Thus, whether the intake valve 172 is driven to be opened or closed, there is no substantial change in an external force impeding the operation of the intake valve 172. As a result, the amount of amplitude damped by the external force remains substantially unchanged regardless of whether the intake valve 172 is driven to be opened or closed.

The electromagnetically driven valve 170 is constructed such that the intake valve 172 reliably moves onto the valve seat 182 without being adversely affected by thermal expansion of a valve shaft 184 and the like. That is, the electromagnetically driven valve 170 is constructed such that even if the valve shaft 184 and the like thermally expand, the intake valve 172 always reaches the valve seat 182 prior to arrival of the armature 30 on the upper core 174. Therefore, as the armature 30 is attracted toward the upper coil 40, the electromagnetically driven valve 170 may bring about circumstances where only the armature 30 and the armature shaft 28 are separated from the valve shaft 184 and move toward the upper coil 40 after arrival of the intake valve 172 on the valve seat 182.

In the electromagnetically driven valve 170, since the upper retainer 58 is attached to the armature shaft 28, the spring force of the upper spring 60 is directly transmitted to the armature shaft 28. On the other hand, since the lower retainer 24 is attached to the valve shaft 184, the spring force of the lower spring 26 is indirectly transmitted to the armature shaft 28 via the valve shaft 184.

As described above, the electromagnetically driven valve 170 brings about circumstances where the armature shaft 28 is separated from the valve shaft 184 after close approximation of the armature 30 to the upper coil 40. Under such circumstances, the spring force of the lower spring 26 is not transmitted to the armature shaft 28, to which only the spring force of the upper spring 60 is transmitted.

The upper spring 60 generates a spring force urging the armature 30 toward the lower coil 42. Hence, when only the spring force generated by the upper spring 60 acts on the armature shaft 28, the amplitude of the armature 30 moving toward the upper coil 40 is abruptly damped.

As the armature 30 moves toward the lower coil 42, both the spring force of the upper spring 60 and the spring force of the lower spring 26 constantly act on the armature shaft 28 until the armature 30 reaches the lower coil 42 after separation of the armature 30 from the upper coil 40. Hence, as the armature 30 moves toward the lower coil 42, the amplitude of the armature 30 is not abruptly damped.

As described hitherto, the electromagnetically driven valve 170 ensures that the spring forces of the upper spring 60 and the lower spring 26 damp the amplitude of the armature shaft 28 more drastically when the armature 30 moves toward the upper coil 40 than when the armature 30 moves toward the lower coil 42. Thus, the amplitude of the intake valve 172 tends to be damped more drastically during the valve closing operation than during the valve opening operation.

In the electromagnetically driven valve 170 according to this embodiment, the upper core 174 is provided with the annular protrusion 176 surrounding the armature 30. Thus, the attracting force generated between the armature 30 and the upper core 174 is relatively large when the intake valve 172 is located in the vicinity of its neutral position, so that the aforementioned difference in damping amount of amplitude can be eliminated. Accordingly, while the internal combustion engine is in operation, the electromagnetically driven valve 170 can suitably open and close the valve body, while making it possible to drastically economize on electric power.

**Claims**

1. An electromagnetically driven valve for an internal combustion engine having

   - an armature (30), coupled to a valve body (18) for reciprocal movement therewith between a first position and a second position;

- a first elastic member (26), coupled to said armature (30) to bias said armature (30) toward the second position, and
- a second elastic member (60), coupled to said armature (30) to bias said armature (30) toward the first position,
- wherein a neutral position of said armature (30) is defined between the first and second positions at the point where the forces applied from said first and second elastic members (26, 60) balance one another,
- a first core (34) including a first coil (42) therein and
- a second core (32) including a second coil (40) therein,
- wherein said first and second cores (34, 32) are disposed on opposite sides of said armature (30) and are positioned so that, when said armature (30) is in the neutral position, said first and second cores (34, 32) are spaced apart from said armature (30), and
- wherein said valve body (18) is an exhaust valve for an internal combustion engine and said first coil (42) generates an electromagnetic force to attract said armature (30) toward the first position in which said exhaust valve is open,

**characterized in that**
said first core (34) is provided with a first protrusion (36) protruding a predetermined length toward said armature (30), thereby making a distance between said first core (34) and said armature (30) smaller than a distance between said second core (32) and said armature (30) when said armature (30) is located in the neutral position, said first protrusion (36) being annular and having a diameter slightly larger than an outer diameter of said armature (30).

2. An electromagnetically driven valve for an internal combustion engine having

- an armature (30), coupled to a valve body (172) for reciprocal movement therewith between a first position and a second position;
- a first elastic member (26), coupled to said armature (30) to bias said armature (30) toward the second position, and
- a second elastic member (60) coupled to said armature (30) to bias said armature (30) toward the first position,
- wherein a neutral position of said armature (30) is defined between the first and second positions at the point where the forces applied from said first and second elastic members (26, 60) balance one another,

- a first core (188) including a first coil (42) therein and
- a second core (174) including a second coil (40) therein,
- wherein said first and second cores (188, 174) are disposed on opposite sides of said armature (30) and are positioned so that, when said armature (30) is in the neutral position, said first and second cores (188, 174) are spaced apart from said armature (30), and
- wherein said valve body (172) is an intake valve for an internal combustion engine and is separated from said armature (30), and said second coil (40) generates an electromagnetic force attracting the armature (30) toward the second position to close said intake valve,

**characterized in that**
said second core (174) is provided with a first protrusion (176) protruding a predetermined length toward said armature (30), thereby making a distance between said second core (174) and said armature (30) smaller than a distance between said first core (188) and said armature (30) when said armature (30) is located in the neutral position, said first protrusion (176) being annular and having a diameter slightly larger than an outer diameter of said armature (30).

3. The electromagnetically driven valve according to claim 1, **characterized in that** said second core (32) is provided with a second protrusion that is smaller than said first protrusion (36).

4. The electromagnetically driven valve according to claim 2, **characterized in that** said first core (188) is provided with a second protrusion that is smaller than said first protrusion (176).

**Patentansprüche**

1. Ein elektromagnetisch angesteuertes Ventil für einen Verbrennungsmotor mit:

- einem Anker (30), gekoppelt mit einem Ventilkörper (18) zur Hin- und Herbewegung hiermit zwischen einer ersten Position und einer zweiten Position;

- einem ersten elastischen Bauelement (26), gekoppelt mit dem Anker (30), um den Anker (30) in Richtung der zweiten Position vorzuspannen, und

- einem zweiten elastischen Bauelement (60), gekoppelt mit dem Anker (30), um den Anker (30) in Richtung der ersten Position vorzuspannen,

- wobei eine Neutralstellung des Ankers (30) zwischen der ersten und der zweiten Position an dem Punkt definiert ist, wo die von dem ersten und dem zweiten elastischen Bauelement (26, 60) ausgeübten Kräfte einander ausgleichen,

- einem ersten Kern (34), welcher eine erste Spule (42) darin aufweist und

- einem zweiten Kern (32), welcher eine zweite Spule (40) darin aufweist,

- wobei der erste und der zweite Kern (34, 32) auf entgegengesetzten Seiten des Ankers (30) angeordnet sind und so positioniert sind, daß, wenn sich der Anker (30) in der Neutralstellung befindet, der erste und der zweite Kern (34, 32) voneinander beabstandet sind, und

- wobei der Ventilkörper (18) ein Auslaßventil für einen Verbrennungsmotor ist und die erste Spule (42) eine elektromagnetische Kraft erzeugt, um den Anker (30) in Richtung der ersten Position, in welcher das Auslaßventil geöffnet ist, anzuziehen,

  ***dadurch gekennzeichnet, daß***

  der erste Kern (34) mit einem ersten Vorsprung (36) ausgestattet ist, der eine vorbestimmte Länge in Richtung des Ankers (30) vorspringt, wodurch ein Abstand zwischen dem ersten Kern (34) und dem Anker (30) kleiner gemacht wird als ein Abstand zwischen dem zweiten Kern (32) und dem Anker (30), wenn sich der Anker (30) in der Neutralstellung befindet, wobei der erste Vorsprung (36) ringförmig ist und einen Durchmesser aufweist, der etwas größer als ein Außendurchmesser des Ankers (30) ist.

2. Ein elektromagnetisch angesteuertes Ventil für einen Verbrennungsmotor mit:

- einem Anker (30), gekoppelt mit einem Ventilkörper (172) zur Hin- und Herbewegung hiermit zwischen einer ersten Position und einer zweiten Position;

- einem ersten elastischen Bauelement (26), gekoppelt mit dem Anker (30), um den Anker (30) in Richtung der zweiten Position vorzuspannen,

- einem zweiten elastischen Bauelement (60), gekoppelt mit dem Anker (30), um den Anker (30) in Richtung der ersten Position vorzuspannen,

- wobei eine Neutralstellung des Ankers (30) zwischen der ersten und der zweiten Position an dem Punkt definiert ist, wo die von dem ersten und dem zweiten elastischen Bauelement (26, 60) ausgeübten Kräfte einander ausgleichen;

- einem ersten Kern (188), welcher eine erste Spule (42) darin aufweist und

- einem zweiten Kern (174), welcher eine zweite Spule (40) darin aufweist,

- wobei der erste und der zweite Kern (188, 174) auf entgegengesetzten Seiten des Ankers (30) angeordnet sind und so positioniert sind, daß, wenn sich der Anker (30) in der Neutralstellung befindet, der erste und der zweite Kern (34, 32) voneinander beabstandet sind, und

- wobei der Ventilkörper (172) ein Einlaßventil für einen Verbrennungsmotor ist und von dem Anker (30) getrennt ist und die zweite Spule (40) eine elektromagnetische Kraft erzeugt, welche den Anker (30) in Richtung der zweiten Position anzieht, um das Einlaßventil zu schließen,

  ***dadurch gekennzeichnet, daß***

  der zweite Kern (174) mit einem ersten Vorsprung (176) ausgestattet ist, der eine vorbestimmte Länge in Richtung des Ankers (30) vorspringt, wodurch ein Abstand zwischen dem zweiten Kern (174) und dem Anker (30) kleiner gemacht wird als ein Abstand zwischen dem ersten Kern (188) und dem Anker (30), wenn sich der Anker (30) in der Neutralstellung befindet, wobei der erste Vorsprung (176) ringförmig ist und einen Durchmesser aufweist, der etwas größer als ein Außendurchmesser des Ankers (30) ist.

3. Das elektromagnetisch angesteuerte Ventil gemäß Anspruch 1, ***dadurch gekennzeichnet, daß*** der zweite Kern (32) mit einem zweiten Vorsprung ausgestattet ist, der kleiner als der erste Vorsprung (36) ist.

4. Das elektromagnetisch angesteuerte Ventil gemäß Anspruch 2, ***dadurch gekennzeichnet, daß*** der erste Kern (188) mit einem zweiten Vorsprung ausgestattet ist, der kleiner als der erste Vorsprung (176) ist.

**Revendications**

1. Soupape à commande électromagnétique pour un moteur à combustion interne comportant

- un induit (30), relié à un corps de soupape (18) pour un mouvement en va et vient entre une première position et une deuxième position ;
- un premier élément élastique (26), relié audit induit (30) pour solliciter ledit induit (30) vers la deuxième position, et
- un deuxième élément élastique (60), relié audit induit (30) pour solliciter ledit induit (30) vers la première position,
- dans lequel une position neutre dudit induit (30) est définie entre les première et deuxième positions au point où les forces appliquées à partir desdits premier et deuxième éléments élastiques (25, 60) s'équilibrent l'une l'autre,
- un premier noyau (34) comprenant une première bobine (42) à l'intérieur et
- un deuxième noyau (32) comprenant une deuxième bobine (40) à l'intérieur,
- dans lequel lesdits premier et deuxième noyaux (34, 32) sont disposés sur des côtés opposés dudit induit (30) et sont positionnés de sorte que, lorsque ledit induit (30) est dans la position neutre, lesdits premier et deuxième noyaux (34, 32) sont éloignés dudit induit (30), et
- dans lequel ledit corps de soupape (18) se trouve dans une soupape d'échappement pour un moteur à combustion interne et ladite première bobine (42) génère une force électromagnétique pour attirer ledit induit (30) vers la première position dans laquelle ladite soupape d'échappement est ouverte,

**caractérisé en ce que**

ledit premier noyau (34) est muni d'une première protubérance (36) faisant saillie d'une longueur prédéterminée vers ledit induit (30), rendant de ce fait une distance entre ledit premier noyau (34) et ledit induit (30) inférieure à une distance entre ledit deuxième noyau (32) et ledit induit (30) lorsque ledit induit (30) est placé dans la position neutre, ladite première protubérance (36) étant annulaire et présentant un diamètre légèrement plus grand qu'un diamètre externe dudit induit (30).

2. Soupape à commande électromagnétique pour un moteur à combustion interne comportant

- un induit (30), relié à un corps de soupape (172) pour un mouvement en va et vient entre une première position et une deuxième position ;
- un premier élément élastique (26), relié audit induit (30) pour solliciter ledit induit (30) vers la deuxième position, et
- un deuxième élément élastique (60), relié audit induit (30) pour solliciter ledit induit (30) vers la première position,
- dans lequel une position neutre dudit induit (30) est définie entre les première et deuxième positions au point où les forces appliquées à partir desdits premier et deuxième éléments élastiques (26, 60) s'équilibrent l'une l'autre,
- un premier noyau (188) comprenant une première bobine (42) à l'intérieur et
- un deuxième noyau (174) comprenant une deuxième bobine (40) à l'intérieur,
- dans lequel lesdits premier et deuxième noyaux (188, 174) sont disposés sur des côtés opposés dudit induit (30) et sont positionnés de sorte que, lorsque ledit induit (30) est dans la position neutre, lesdits premier et deuxième noyaux (188, 174) sont éloignés dudit induit (30), et
- dans lequel ledit corps de soupape (172) se trouve dans une soupape d'admission pour un moteur à combustion interne et est séparé dudit induit (30), et ladite deuxième bobine (40) génère une force électromagnétique attirant l'induit (30) vers la deuxième position pour fermer ladite soupape d'admission,

**caractérisé en ce que**

ledit deuxième noyau (174) est muni d'une première protubérance (176) faisant saillie d'une longueur prédéterminée vers ledit induit (30), rendant de ce fait une distance entre ledit deuxième noyau (174) et ledit induit (30) inférieure à une distance entre ledit premier noyau (188) et ledit induit (30) lorsque ledit induit (30) est placé dans la position neutre, ladite première protubérance (176) étant annulaire et présentant un diamètre légèrement plus grand qu'un diamètre externe dudit induit (30) .

3. Soupape à commande électromagnétique selon la revendication 1, **caractérisée en ce que** ledit deuxième noyau (32) est muni d'une deuxième protubérance qui est inférieure à ladite première protubérance (36).

4. Soupape à commande électromagnétique selon la revendication 2, **caractérisée en ce que** ledit premier noyau (188) est muni d'une deuxième protubérance qui est inférieure à ladite première protubérance (176).

# FIG. 1

# FIG.2

30

$\Phi U = \dfrac{NIO}{RU}$

62

40

32

# FIG.3

30

$\Phi L = \dfrac{NIO}{RL}$

36

64

42

34

15

# F I G. 4

ΦU

# F I G. 5

ΦL

# F I G. 6

# F I G. 7

# FIG. 8

# F I G. 9

# F I G. 10

# F I G. 11